# EUROPEAN PATENT SPECIFICATION

(11) **EP 0 446 578 B1**
(45) Date of publication and mention of the grant of the patent: **01.05.1996**
(21) Application number: 91100608.8
(22) Date of filing: 18.01.1991
(51) Int. Cl.: C08G 77/60, C25B 3/04, C25B 3/10

(54) **Methods for the preparation of silanes and polysilanes**
Methoden zur Herstellung von Silanen und Polysilanen
Procédés pour la préparation de silanes et polysilanes

(30) Priority: 18.01.1990 JP 9947/90; 15.06.1990 JP 158225/90
(43) Date of publication of application: 18.09.1991
(73) Proprietor: OSAKA GAS COMPANY LIMITED, Osaka-shi Osaka-fu (JP)
(72) Inventor: Shono, Tatsuya, Kyoto-shi, Kyoto-fu (JP); Kashimura, Shigenori, Kyoto-shi, Kyoto-fu (JP); Nishida, Ryoichi, Ikoma-shi, Nara-ken (JP); Kawasaki, Shinichi, Osaka-shi, Osaka-fu (JP)
(74) Representative: Patentanwälte Beetz - Timpe - Siegfried Schmitt-Fumian - Mayr

(56) References cited:
- EP-A- 0 314 327
- US-A- 4 762 895
- US-A- 4 820 788
- JOURNAL OF ORGANOMETALLIC CHEMISTRY, vol. 212, 1981, LAUSANNE CH pages 155 - 161; E. HENGGE ET AL.: 'AN ELECTROCHEMICAL METHOD FOR THE SYNTHESIS OF SILICON-SILICON BONDS'

## Description

The present invention relates to methods for preparing silanes and polysilanes.

Polysilanes are drawing attention for their use as precursors of ceramics or as optoelectronic materials. A process for preparing polysilanes is known wherein a dialkyldichlorosilane, a dichlorotetraalkyldisilane, or the like, dissolved in toluene is stirred at a temperature of 100 °C or higher for an extended time period using an alkali metal such as metallic sodium to achieve reductive coupling(J. Am. Chem. Soc., 103 (1981) 7352). The process, however, has drawbacks. The process involves severe reaction conditions (e.g., a long period of heating), does not permit to control the molecular weight, and poses a serious problem of safety because of the large amount of alkali metal used in manufacture on a commercial scale.

To overcome these drawbacks, a process has been proposed which is carried out under moderate conditions by subjecting a dialkyldichlorosilane or the like to an electroreduction at room temperature (J. Organomet. Chem., 212 (1981) 155). The proposed process is conducted using mercury or cadmium as an anode, and platinum, mercury, lead, titanium or iron as a cathode in a H-shaped cell equipped with a diaphragm, and employing tetra-n-butylammonium perchlorate as a supporting electrolyte and 1,2-dimethoxyethane as a solvent. The electroreduction process has been expected to obviate the foregoing problems and to allow to effectively control the molecular weight and the distribution of molecular weight. However, with this process it has not been possible to produce substances identifiable as polysilanes.

The invention is based on the results of extensive research to resolve the above problems of conventional techniques. It has been found that the prior art problems can be substantially obviated or significantly mitigated by subjecting a halosilane to an electrochemical reaction using a specific metal. as an anode.

A further finding was that the reaction efficiency can be markedly improved by changeover of the polarity of electrodes at specific time intervals during the electrochemical reaction.

An additional finding was that when the reactor or the reaction mixture is sonicated in the foregoing electrochemical reaction, the reaction time is markedly shortened, and the reaction product is produced in increased yields.

It is the object of the present invention to provide methods for preparing silane compounds comprising at least one Si-Si bond with molecule, particularly low-molecular weight silanes, and for preparing polysilanes by means of a simple electrochemical reaction in high yields, without the use of mercury or cadmium electrodes, and within short reaction times.

The above object is achieved according to the claims. The dependent claims relate to preferred embodiments.

The concept of the present invention is specifically applicable to the preparation of
- dimer-like silanes having at least one Si-Si bond in the molecule from a starting halosilane according to the following general reaction: 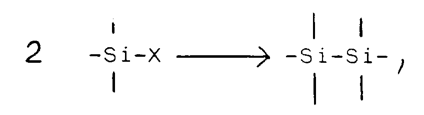 and
- polysilanes, starting from dihalosilanes, according to the following general reaction:

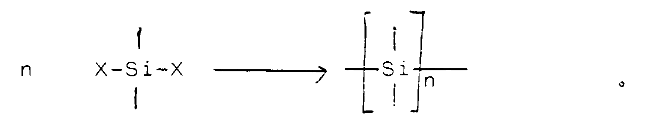

The method of the present invention for preparing dimer-type silane compounds of the general formulae I and II, comprising at least one Si-Si bond in the molecule, 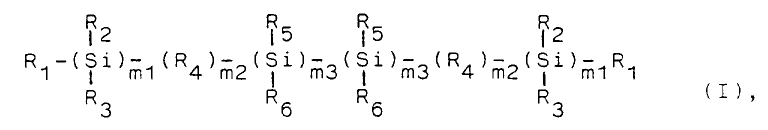 wherein
- R₁, R₂, R₃, R₅ and R₆, being the same or different, are a hydrogen atom, an alkyl group, an aryl group, an alkoxy group or an amino group,
- R₄ is Si, any non-Si atom, particularly oxygen, or any divalent organic group, eventually comprising a heteroatom, particularly oxygen, in the main chain, particularly an aromatic group, an unsaturated aliphatic group, particularly

   -(CH₂)ₘ₄ or -(CH₂-CH₂-O)ₘ₄,

   wherein m4 is 1 to 20,
- m1 and m3 independently are 1 to 20, and preferably 1 to 3,
   and
- m2 is 0 to 20, and preferably 0 to 3, and II, 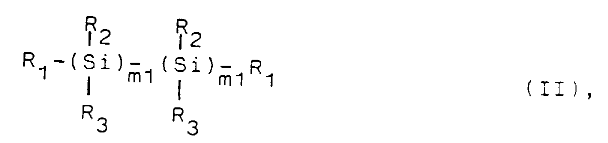
wherein R₁, R₂, R₃ and m1 are defined as in formula I,
is characterized in that
(A) for preparing compounds of formula I,
   a halosilane compound
   of the general formula III, 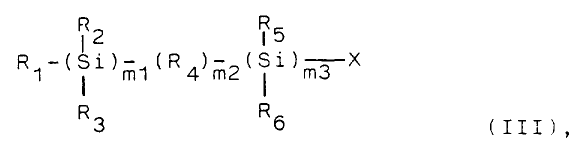 wherein R₁, R₂, R₃, R₄, R₅, R₆, m1, m2 and m3 are defined as above, and X is a halogen atom, particularly chlorine,
   and
(B) for preparing compounds of formula II, a halosilane compound of the general formula IV, 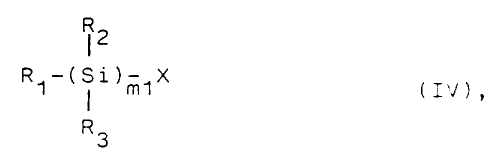 wherein R₁, R₂, R₃, m1 and X are defined as above, is subjected to an electrochemical reaction using an anode of magnesium, copper, aluminum, or an alloy predominantly containing these metals, preferably of magnesium or an alloy thereof.

The method of the present invention for preparing polysilanes of the general formulae V and VI, 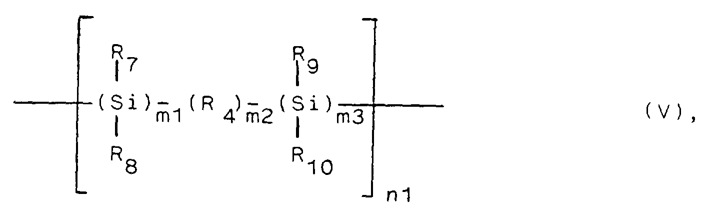 wherein
- R₄ is Si, any non-Si atom, particularly oxygen, or any divalent organic group, eventually comprising a heteroatom particularly oxygen, in the main chain, particularly an aromatic group, an unsaturated aliphatic group, particularly -(CH₂ 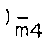 or -(CH₂-CH₂-O 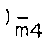 , wherein m4 is 1 to 20,
- R₇, R_{8,} R₉, R₁₀, being the same or different, are a hydrogen atom, an alkyl group, an aryl group, an alkoxy group or an amino group,
- m1 and m3 independently are 1 to 20, and preferably 1 to 3,
- m2 is 0 to 20, and preferably 0 to 3, and
- n1 is 10 to 10 000,
   and VI, 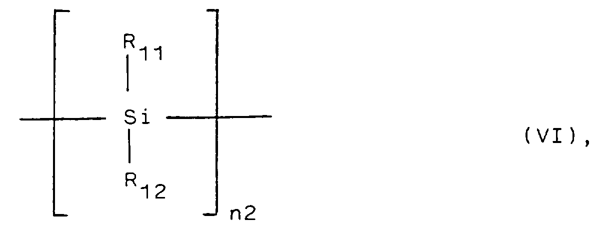 wherein
- R₁₁ and R₁₂, being the same or different, are a hydrogen atom, an alkyl group, an aryl group, an alkoxy group or an amino group,
   and
- n2 is 10 to 11 000, is characterized in that
   (A) for preparing compounds of formula V, a dihalosilane of the general formula VII, 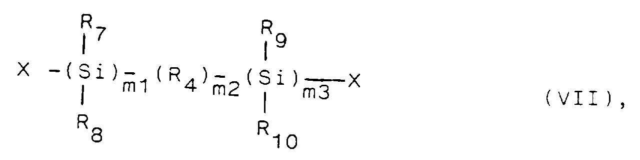 wherein R₄, R₇, R₈, R₉, R₁₀, m1, m2 and m3 are as defined above, and X is a halogen atom, particularly chlorine,
      and
   (B) for preparing compounds of formula VI, a dihalosilane of the general formula VIII, 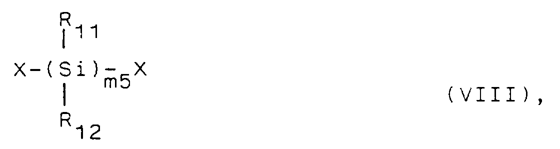 wherein R₁₁, R₁₂ and X are as defined above, and m5 is 1 to 20, and preferably 1 to 3, and more preferably 1 or 2,
      is subjected to an electrochemical reaction using an anode of magnesium, copper or aluminum, or an alloy predominantly containing these metals, preferably of magnesium or an alloy thereof.

In accordance with prefered embodiments,
(A) for preparing compounds of the general formula Ia, 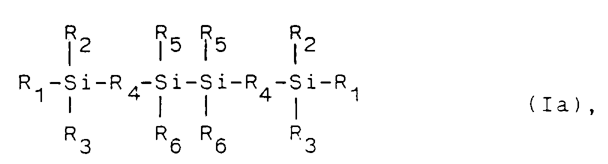 wherein R₁ , R₂, R₃, R₄, R₅ and R₆ are as defined above,
   representing compounds of the general formula I, wherein m1 , m2 and m3 are equal to 1,
   a halosilane compound of the general formula IIIa, 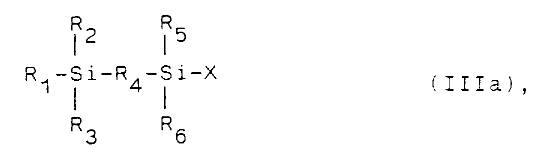 wherein R₁ , R₂, R₃, R₄ and X are as defined above, and
(B) for preparing compounds of the general formula IIa, 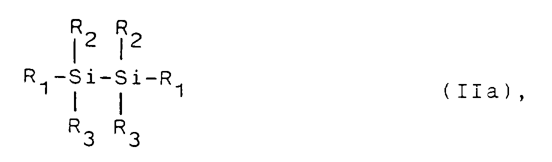 wherein R₁, R₂ and R₃ are as defined above, representing compounds of the general formula II wherein m1 is equal to 1,
   a halosilane compound of the general formula IVa, 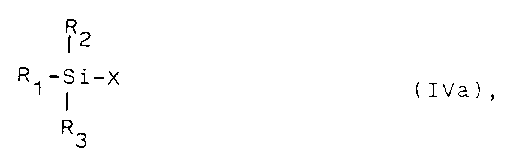 wherein R₁, R₂, R₃ and X are as defined above, is subjected to the electrochemical reaction.

In accordance with prefered embodiments relating to the preparation of polysilanes,
(A) for preparing polysilanes of the general formula Va, 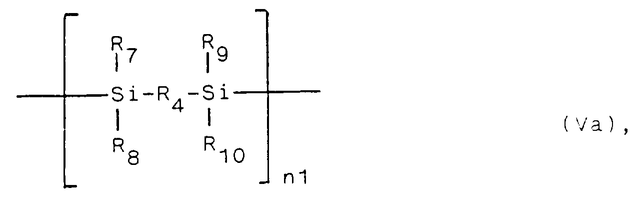 wherein R₄, R₇, R_{8,} R₉, R₁₀ and n1 are as defined above,
   representing polysilanes of the general formula V wherein m1, m2 and m3 are equal to 1,
   a dihalosilane of the general formula VIIa, 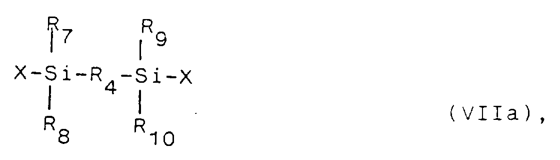 wherein R₄, R₇, R₈, R₉, R₁₀
   and X are as defined above, and
(B) for preparing polysilanes of the general formula VI,
   a dihalosilane of the general formula VIIIa, 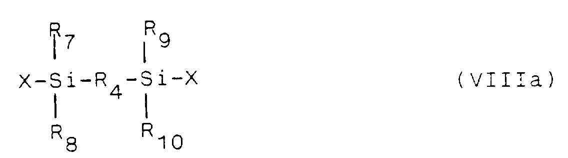 wherein R₁₁, R₁₂ and X are as defined above,
is subjected to the electrochemical reaction.

In accordance with other prefered embodiments of the above-defined methods,
(a) m1, m3 and/or m5 are 1 or 2,
   and/or
(b) m2 is 1,
   and/or
(c) the substituents R₁, R₂, R₃, R₅, R₆, R₇, R₈, R₉, R₁₀, R₁₁ and/or R₁₂ are C₁₋₁₀-alkyl groups, and preferably C₁₋₆-alkyl groups,
   and/or
(d) R₄ is (CH₂)ₘ₄ or (CH₂-CH₂-O)ₘ₄, m4 being 1 to 20.

According to another prefered embodiment, the substituents R₁, R₂, R₃, R₅, R₆, R₇, R₈, R₉, R₁₀, R₁₁ and/or R₁₂ are aryl groups selected from phenyl,
phenyl groups substituted with at least one C₁₋₆-alkyl group, and p-alkoxyphenyl groups, particularly p-C₁₋₁₀-alkoxyphenyl groups.

The halosilane and/or the dihalosilane compounds of formulae III, IIIa, IV, IVa, VII, VIIa, VIII and VIIIa, respectively, are preferably used in a concentration in the solvent of 0.05 to 20 mole/l, and more preferably of 0.2 to 15 mole/l.

Another prefered embodiment consists in that the electrochemical reaction is carried out under sonication, preferably at a frequency of the ultrasonic or supersonic waves of 10 to 70 kHz.

According to the present invention, it is further preferable to change over the polarity of the electrodes at predetermined time intervals, particularly within the range of 0.01 s to 60 min, preferably of 1 s to 10 min, and more preferably of 10 s to 3 min.

In the case of preparing compounds of formula VI from compounds of formula VIII where m5 is 1 to 3, preferably 2 of the groups R₁₁ and R₁₂ are the same or different in case of m5 = 1, 4 R₁₁/R₁₂ groups are the same or different in case of m5 = 2, and 6 R₁₁/R₁₂ groups are the same or different in case of m5 = 3.

In the following, the methods of the invention for preparing the silanes and polysilanes as defined above will be further explained with reference to four typical embodiments (i), (ii), (iii) and (iv):
(i) Electrochemical reaction with use of an electrode (anode) of magnesium, copper, aluminum, or an alloy predominantly containing these metals, as particularly defined in claims 1 to 4;
(ii) Electrochemical reaction as defined under (i), but with sonication;
(iii) Electrochemical reaction as defined under (i), but with use of another electrode of the same material as the first electrode (anode), or of another electroconductive material, and with changing over the polarity of the electrodes at specific time intervals;
(iv) Electrochemical reaction as defined under (i), (ii) and (iii), i.e. with sonication and changing over the electrode polarities at specific time intervals.

Preferred examples of the substituents R₁, R₂, R₃, R₅, R₆, R₇, R₈, R₉, R₁₀, R₁₁ and/or R₁₂ are alkyl groups having 1 to 10 carbon atoms among which those of 1 to 6 carbon atoms are desirable. Examples of aryl groups include, for example, the phenyl group, phenyl groups substituted with at least one alkyl group of 1 to 6 carbon atoms, p-alkoxyphenyl groups, etc. Examples of alkoxy groups are those having 1 to 10 carbon atoms among which those of 1 to 6 carbon atoms are preferred. When the above-mentioned substituents are an amino group or an organic substituent, at least one of the hydrogen atoms may be substituted with the other functional group, such as alkyl, aryl or alkoxy groups.

X is a halogen atom, such as chlorine, fluorine, bromine and iodine atoms among which chlorine is preferred.

In the methods of the invention, the species of halosilanes of the formula (1) and dihalosilanes of formulae III, IIIa, IV, IVa, VII, VIIa, VIII and VIIIa may be used singly or as mixtures of at least two of them. It is preferable to use halosilanes and dihalosilanes of highest possible purity. For example, the hatosilanes and dihalosilanes are preferably dried over calcium hydride and distilled.

For the reaction, the halosilanes/dihalosilanes are dissolved in a solvent before use. Examples of useful solvents include a wide range of aprotic solvents. Specific examples of useful aprotic solvents are propylene carbonate, acetonitrile, dimethylformamide, dimethylsulfoxide, 1,2-dimethoxyethane, bis(2-methoxyethyl)-ether, p-dioxane, tetrahydrofuran, methylene chloride, etc. These solvents may be used alone or in the form of mixtures of at least two of them. Preferably ether solvents such as 1,2-dimethoxyethane, bis(2-methoxyethyl)-ether, p-dioxane, tetrahydrofuran, and the like may be used alone or in the form of mixtures or in combination with other solvents. Among them, more preferable are 1,2-dimethoxyethane and tetrahydrofuran. Too low a concentration of the halosilane in the solvent reduces the current efficiency, whereas too high a concentration thereof may fail to dissolve the supporting electrolyte. A suitable concentration of the halosilane in the solvent is 0.05 to 20 mole/l, preferably 0.2 to 15 mole/l, and more preferably 0.3 to 13 mole/l.

Examples of supporting electrolytes useful in the invention are sodium perchlorate, lithium perchlorate and like alkali metal perchlorates; lithium tetrafluoroborate and like alkali metal tetrafluoroborates; tetra-n-butylammonium chloride and like tetraalkylammonium halides; tetra-n-butylammonium perchlorate and like tetraalkylammonium perchlorates; tetra-n-butylammonium tetrafluoroborate and like tetraalkylammonium tetrafluoroborates; etc. These supporting electrolytes may be used alone or in the form of mixtures of at least two of them. Preferred examples are lithium perchlorate, lithium tetrafluoroborate, tetra-n-butylammonium perchlorate and tetra-n-butylammonium tetrafluoroborate among which lithium perchlorate and tetra-n-butylammonium perchlorate are most suitable. Too low a concentration of the supporting electrolyte in the solvent imparts a reduced ionic conductivity to the reaction mixture, thus failing to achieve a satisfactory reaction progress, whereas too high a concentration thereof leads to excessive quantity of current applied, failing to obtain the electrode potential required for the reaction. A suitable concentration of the supporting electrolyte in the solvent is about 0.05 to about 5 mole/l, preferably about 0.1 to about 3 mole/l, and more preferably about 0.15 to about 1.2 mole/l.

An anode of magnesium, copper or aluminum or an alloy predominantly containing these metals is used in the process (i). Cathode materials are not limited insofar as an electric current can flow. Preferred cathode materials can be any of magnesium, copper, zinc, tin, aluminum, nickel and cobalt and alloys predominantly containing these metals. Preferred anode materials are magnesium, copper and alloys predominantly containing them among which magnesium is most preferred. The electrode form is not specifically limited insofar as an electric current can stably flow. Preferred examples of the form are rods, plates, tubes, coiled plates, etc. It is desirable to remove an oxide film from the electrode surface to a maximal extent before use. The removal of oxide film from the electrode can be effected by any desired method, as by washing the electrode with an acid and then with ethanol and ether and drying it under reduced pressure, by polishing the electrode in a nitrogen atmosphere, by conducting a combination of these methods, etc.

In carrying out the process (i), the halosilanes/dihalosilanes, the supporting electrolyte and the solvent are charged into a sealable reactor having an anode and a cathode disposed therein. Subsequently an electrochemical reaction is conducted by passing a specific amount of electric current, preferably with stirring by mechanical or magnetic means. The interior of the reactor has a dry atmosphere, preferably an atmosphere of dry nitrogen or inert gas, more preferably a deoxidized atmosphere consisting of dry nitrogen or inert gas. The current is passed in an amount of at least 1 F/mol, based on the halogen atoms in the halosilane/dihalosilane. The molecular mass can be controlled by adjusting the amount of current applied.

Optionally after a disilane/polysilane produced by use of at least 0.1 F/mol of electricity is separated as a product from the reaction system, the remaining halosilane/dihalosilane may be recovered for reuse. The reaction time is variable depending on the amount of the halosilane/dihalosilane used, the resistance of the electrolytic solution associated with the supporting electrolyte, the molecular mass of the desired silane/polysilane, etc., and is suitably determined as required. The reaction temperature is in the range lower than the boiling point of the solvent used. The process (i) is advantageous in that the procedure does not necessitate a diaphragm which is essential to use in conventional electrode reduction reactions.

The process (ii) is substantially the same as the process (i) except that the reactor or the reaction mixture is sonicated in the electrochemical reaction. The method of sonication is not specifically limited, and is carried out as by dipping the reactor in a ultrasonic bath, by disposing an ultrasonic vibration element in the reactor, etc. The preferred frequency of the ultrasonic/supersonic waves is 10 to 70 kHz. The output of sonication may be suitably determined depending on the reaction conditions, including the type of starting materials, the amount of reaction mixture, the shape and dimensions of reactor and electrodes, the type of materials of the electrodes and the surface area thereof, etc. A suitable output is about 0.01 to about 24 kW per 1 liter of the reaction mixture. The sonication markedly reduces the reaction time to 1/3 to 2/3 the reaction time required in the reaction without sonication. In the process (ii), the solution is properly stirred by sonication alone or, when required, in combination with mechanical means.

In the process (iii), the reaction is performed in the same manner as in the process (i) with the exception of using one electrode of magnesium, copper or aluminum or an alloy predominantly containing such metals and the other electrode of an electroconductive material which is the same as or different from the above materials (such as nickel or cobalt), and effecting the changeover of electrode polarity at specific time intervals. Changingover the electrode polarity stabilizes the current value which results in smooth progress of reaction, thereby reducing the reaction time with respect to the specific quantity of electricity used. The changeover of electrode polarity is carried out at time intervals of 0.01 s to 60 min, preferably 1 s to 10 min, and more preferably 10 s to 3 min. For changing over the polarity, the use of two electrodes made of the same type of metals is preferred in the synthesis of high molecular mass polysilanes because the use thereof permits metallic ions (e.g. Mg⁺) to dissolve out and migrate between the electrodes, thereby decreasing the consumption of the electrodes, and allowing the current to flow for an extended period. The process (iii) also does not require a diaphragm.

In the process (iv), the reactor or the reaction mixture is sonicated in the electrochemical reaction. The process (iv) is substantially the same as the process (iii) with the exception of conducting sonication. The sonication is conducted in the process (iv) in the same manner as in the process (ii). In the process (iv), the changeover of electrode polarity and the sonication in combination shorten the reaction time and increase the yield. When required, mechanical stirring means can be used in addition in the process (iv).

In the practice of the invention, it is desirable to remove the water from the solvent and the supporting electrolyte before their use in order to prevent the incorporation of oxygen in the main chain of the silanes/polysilanes. For example, when tetrahydrofuran or 1,2-dimethoxyethane is used as a solvent, the solvent is preferably dried over sodium/benzophenone ketyl or the like before use. The removal of water from the supporting electrolyte is preferably conducted by drying with heating under reduced pressure, or by addition of a substance (such as trimethylchlorosilane or the like) which easily reacts with water and which is easily removable.

The polysilanes of formula VI prepared according to the invention have an average molecular mass of about 1000 to about 1 million (namely n=about 10 to about 11000 in the formula VI).

The methods of the present invention can be used for the preparation of specific silane compounds.

For example, when a halosilane represented by the formula IVa shown below is subjected to an electrochemical reaction according to any of the methods (i) to (iv), 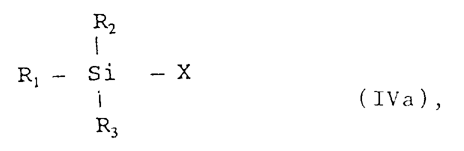 wherein R₁, R₂ and R₃ are the same or different and each represent a hydrogen atom, an alkyl group, an aryl group, an alkoxy group or an amino group, as defined above, and X is a halogen atom, a disilane represented by the formula IIa shown below can be synthesized, 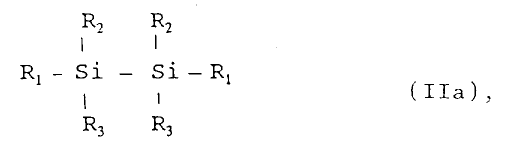 wherein R₁, R₂ and R₃ are as defined above.

For another example, when a silane compound represented by the formula VIIa shown below is subjected to an electrochemical reaction according to any of the processes (i) to (iv), 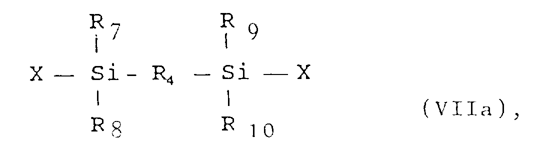 wherein R₁ is e.g. an aromatic group, an unsaturated aliphatic group, a group -(CH₂)ₘ- or a group -(CH₂-CH₂-O)ₘ- (wherein m is 1 to 20), and R₇, R₈, R₉ and R₁₀ are the same or different and each represent a hydrogen atom, an alkyl group, an aryl group, an alkoxy group or an amino group, and X is a halogen atom, a polymer can be synthesized which is represented by the formula Va shown below and which contains Si-Si bonds in the main chain, 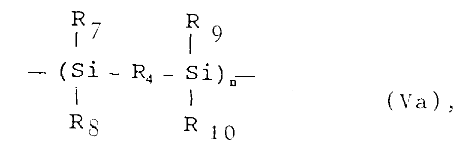 wherein R₄, R₇, R₈, R₉ and R₁₀ are as defined above, and n is 10 to 10000.

According to the present invention, the following remarkable results can be achieved.
(a) Since the processes of the invention do not use mercury or cadmium as electrode materials, silanes and polysilanes can be produced with safety and ease without the risk of causing environmental pollution.
(b) Since the processes of the invention do not employ an alkali metal, silanes and polysilanes can be produced with safety and ease even on a commercial scale.
(c) The molecular mass of the silanes and polysilanes to be produced can be controlled by adjusting the quantity of electricity applied.
(d) The formation of Si-O-Si bonds in the main chain can be effectively prevented.
(e) The fact that the use of a diaphragm is not necessary overcomes the problem of clogging of diaphragm, thereby serving to simplify the operation.
(f) The reaction time can be significantly shortened, and the yield can be further significantly improved when sonication is conducted in the electrochemical reaction.

In the following, the invention is explained with more details with reference to examples.

### Example 1

A quantity of 0.64 g of anhydrous lithium perchlorate was fed to a 30 ml-vol. three-necked flask (hereinafter referred to as "reactor") equipped with a three-way cock and two magnesium electrodes (1 cm x 1 cm x 5 cm; washed sequentially with dilute sulfuric acid, ethanol and ether, dried under reduced pressure and polished in a nitrogen atmosphere to eliminate an oxide film from the electrode surface).

Over a period of 6 h, the content of the reactor as heated at 50 °C under an internal pressure reduced to 1,33 Pa (1 mm Hg), thereby drying the lithium perchlorate. Dry nitrogen was charged into the reactor after removal of oxygen from the reactor. Then 15 ml of tetrahydrofuran were dried over sodium-benzophenone ketyl and added. A quantity of 0.97 ml of methylphenyldichlorosilane dried over calcium hydride and distilled was then added with a syringe. While the reactor was maintained at room temperature by means of a water bath, an electric current was applied with a constant-voltage source. While the polarity of the two electrodes was changed over every one minute with use of a commutator, an electric current was applied for about 96 h to pass 5.4 F/mol of electricity, based on the chlorine content of the methylphenyldichlorosilane.

After completion of the reaction, 150 ml of a 1 N solution of hydrochloric acid was added to the reaction mixture, and the resulting mixture was extracted with ether, followed by reprecipitation from 2-propanol and tetrahydrofuran.

The reaction gave a polysilane having a mass-average molecular mass of 5540. The oxygen content of the polysilane was up to 0.1 %, which confirmed a very low content of oxygen in the main chain.

### Example 2

An electrochemical reaction was conducted in the same manner as in Example 1 with the exception of using 7.5 ml of tetrahydrofuran and applying 4.8 F/mol of electricity, based on the chlorine content of methylphenyldichlorosilane.

The reaction gave a polysilane having a mass-average molecular mass of 21900.

### Example 3

An electrochemical reaction was carried out by the same procedure as in Example 1 with the exception of using 1.5 g of 1,2-dichlorotrimethylphenyldisilane as the starting material represented by the formula VIII/VIIIa and applying 4.4 F/mol of electricity, based on the chlorine content. The application of electric current was maintained for about 168 h.

The reaction produced a polysilane having a mass-average molecular mass of 11400 in a yield of 5 %.

### Example 4

An electrochemical reaction was conducted in the same manner as in Example 1 with the exception of using methyl-n-hexyldichlorosilane as the starting material of formula VIII/VIIIa.

The reaction gave the corresponding polysilane.

### Example 5

An electrochemical reaction was effected in the same manner as in Example 1 with the exception of using dimethoxydichlorosilane as the starting material of the formula (1).

The reaction gave the corresponding polysilane.

### Example 6

An electrochemical reaction was conducted in the same manner as in Example 1 with the exception of using methyl-p-biphenylyldichlorosilane as the starting material of formula VIII/VIIIa.

The reaction gave the corresponding polysilane.

### Example 7

An electrochemical reaction was carried out using methylphenyldichlorosilane in the same manner as in Example 1 except that a magnesium electrode (1 cm x 1 cm x 5 cm) was used as an anode and a nickel electrode (1 cm x 0.1 cm x 5 cm) as a cathode, without changing over the electrode polarity.

The reaction gave a polysilane similar to that prepared in Example 1.

### Example 8

An electrochemical reaction was performed using methylphenyldichlorosilane by the same procedure as in Example 1 with the exception of using copper electrodes (1 cm x 0.1 cm x 5 cm) as an anode and a cathode.

The reaction gave a polysilane similar to that obtained in Example 1.

### Example 9

An electrochemical reaction was conducted using methylphenyldichlorosilane in the same manner as in Example 1 with the exception of using tetra-n-butylammonium perchlorate as a supporting electrolyte.

The reaction gave a polysilane similar to that obtained in Example 1.

### Example 10

An electrochemical reaction was effected using methylphenyldichlorosilane by the same procedure as in Example 1 with the exception of using, as a solvent, 15 ml of 1,2-dimethoxyethane dried over sodium-benzophenone ketyl.

The reaction gave a polysilane similar to that obtained in Example 1.

### Example 11

An electrochemical reaction was carried out by the same procedure as in Example 1 with the exception of using 1.94 ml of methylphenyldichlorosilane and applying 3.2 F/mol of electricity, based on the chlorine content. The passage of current continued for about 118 h.

After completion of the reaction, the reaction mixture was subjected to reprecipitation from ethanol and benzene, giving a polysilane having a mass-average molecular mass of 8960 in a yield of 22 %.

### Example 12

An electrochemical reaction was conducted in the same manner as in Example 11 except that the reactor was dipped in an ultrasonic washer (output 60 W, frequency 45 kHz), and that 4.0 F/mol of electricity, based on the chlorine content, were applied. The application of current was continued for about 85 h.

After completion of the reaction, the reaction mixture was subjected to reprecipitation from ethanol and benzene, giving a polysilane having a mass-average molecular mass of 9780 in a yield of 33 %.

### Example 13

An electrochemical reaction was effected in the same manner as in Example 3 except that the reactor was dipped in an ultrasonic washer (output 60 W, frequency 45 kHz), and that 4.0 F/mol of electricity, based on the chlorine content, were applied. The application of electric current continued for about 72 h.

After completion of the reaction, the reaction mixture was subjected to reprecipitation from ethanol and benzene, giving a polysilane having a mass-average molecular mass of 8100 in a yield of 15 %.

### Example 14

An electrochemical reaction was carried out by the same procedure as in Example 12 with the exception of using aluminum electrodes (1 cm x 0.1 cm x 5 cm) as anode and cathode.

A polysilane having a mass-average molecular mass of 8700 was produced in a yield of 15 %.

### Example 15

An electrochemical reaction was conducted in the same manner as in Example 12 with the exception of drying the anhydrous lithium perchlorate over trimethylchlorosilane.

After completion of the reaction, the reaction mixture was subjected to reprecipitation from ethanol and benzene, giving a polysilane having a mass-average molecular mass of 11500 in a yield of 65 %.

### Example 16

An electrochemical reaction was conducted in the same manner as in Example 12 with the exception of using 3.9 ml of methylphenyldichlorosilane and 4.0 ml of tetrahydrofuran, and applying 0.4 F/mol of electricity, based on the chlorine content.

After completion of the reaction, the reaction mixture was subjected to reprecipitation from ethanol and benzene, giving a polysilane having a mass-average molecular mass of 55500 in a yield of 15 %.

### Comparison Example 1

An electrochemical reaction was carried out using methylphenyldichlorosilane in a reactor having no diaphragm in the same manner as in Example 12 with the exception of using platinum electrodes (1 cm x 1 cm x 0.1 cm) as anode and cathode.

After completion of the reaction, the reaction mixture was subjected to reprecipitation from ethanol and benzene. However, substantially no precipitate was obtained.

This and further results reveal that when an electrochemical reaction is conducted using platinum electrodes in a reactor having no diaphragm, generally the reaction gives a polysilane having a mass-average molecular mass of only up to 800.

## Claims

1. A method for preparing dimer-type silane compounds comprising at least one Si-Si bond in the molecule and having one of the general formulae I 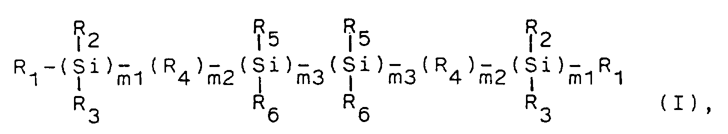 wherein
- R₁, R₂, R₃, R₅ and R₆, being the same or different, are a hydrogen atom, an alkyl group, an aryl group, an alkoxy group or an amino group,
- R₄ is Si, any non Si-atom, or any divalent organic group, eventually comprising a heteroatom in the main chain,
- m1 and m3 independently are 1 to 20,
and
- m2 is 0 to 20,
and II, 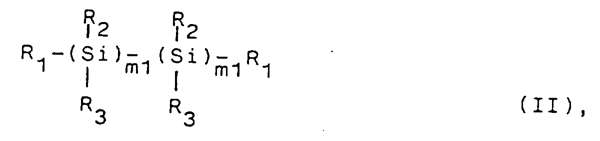
wherein R₁, R₂, R₃ and m1 are defined as in formula I, by subjecting to an electrochemical reaction
(A) for preparing compounds of formula I,
a halosilane compound
of the general formula III, 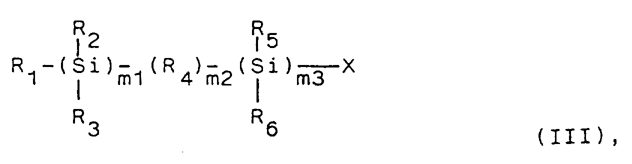 wherein R₁, R₂, R₃, R₄, R₅, R₆, m1, m2 and m3 are defined as above, and X is a halogen atom,
and
(B) for preparing compounds of formula II, a halosilane compound of the general formula IV, 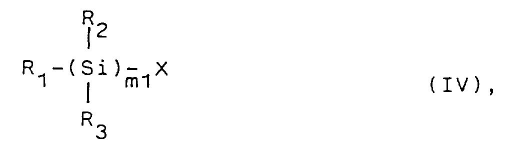 wherein R₁, R₂, R₃, m1 and X are defined as above,
characterized in that
said electrochemical reaction is carried out using an anode of magnesium, copper, aluminum, or an alloy predominantly containing these metals.

2. A method for preparing polysilanes of the general formulae V 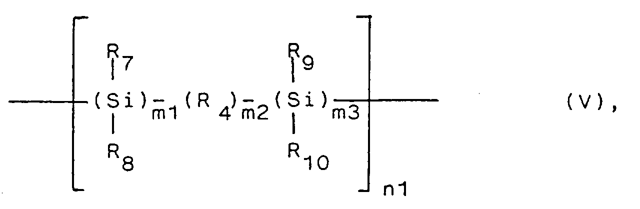 wherein
- R₄ is Si, any non-Si atom, or any divalent organic group, eventually comprising a heteroatom, in the main chain,
- R₇, R₈, R₉, R₁₀, being the same or different, are a hydrogen atom, an alkyl group, an aryl group, an alkoxy group or an amino group,
- m1 and m3 independently are 1 to 20,
- m2 is 0 to 20,
and
- n1 is 10 to 10 000,
and VI, 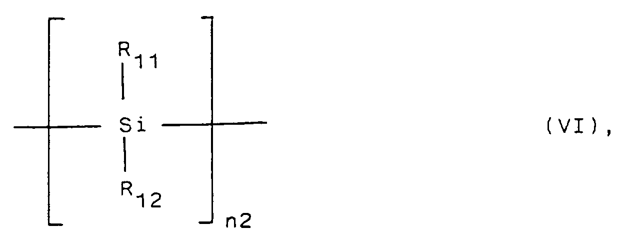
wherein
- R₁₁ and R₁₂, being the same or different, are a hydrogen atom, an alkyl group, an aryl group, an alkoxy group or an amino group,
and
- n2 is 10 to 11 000,
by subjecting to an electrochemical reaction
(A) for preparing compounds of formula V, a dihalosilane of the general formula VII, 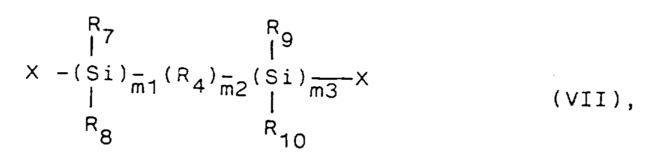 wherein R₄, R₇, R₈, R₉, R₁₀, m1, m2 and m3 are as defined above, and X is a halogen atom,
and
(B) for preparing compounds of formula VI, a dihalosilane of the general formula VIII, 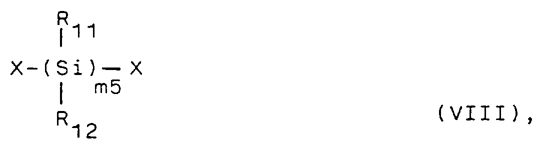 wherein R₁₁, R₁₂ and X are as defined above, and m5 is 1 to 20,
characterized in that said electrochemical reaction is carried out using an anode of magnesium, copper or aluminum, or an alloy predominantly containing these metals.

3. The method according to claims 1 or 2, characterized in that m1, m3 and/or m5 are 1 to 3 and/or m2 is 0 to 3.

4. The method according to one of claims 1 to 3, characterized in that m1, m3 and/or m5 are 1 or 2 and/or m2 is 1.

5. The method of claim 1, characterized in that
(A) for preparing compounds of the general formula Ia, 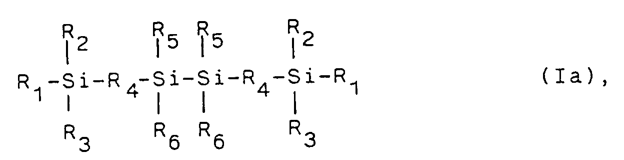 wherein R₁, R₂, R₃, R₄, R₅ and R₆ are as defined in claim 1,
representing compounds of the general formula I,
wherein m1, m2 and m3 are equal to 1,
a halosilane compound of the general formula IIIa, 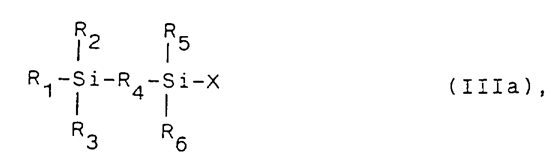 wherein R₁, R₂, R₃, R₄ and X are as defined in claim 1,
and
(B) for preparing compounds of the general formula IIa, 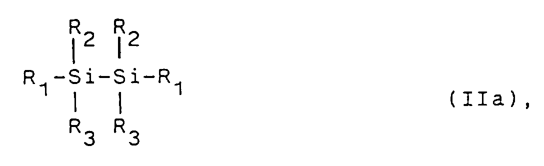 wherein R₁, R₂ and R₃ are as defined in claim 1, representing compounds of the general formula II wherein m1 is equal to 1,
a halosilane compound of the general formula IVa, 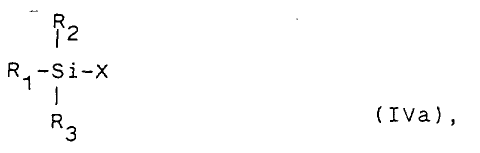 wherein R₁, R₂, R₃ and X are as defined in claim 1, is subjected to the electrochemical reaction.

6. The method of claim 2, characterized in that
(A) for preparing polysilanes of the general formula Va, 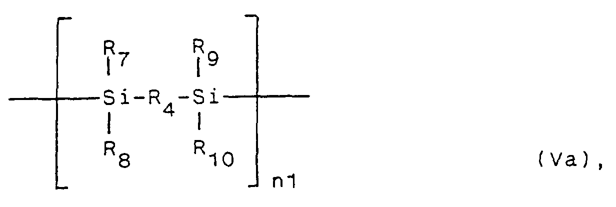 wherein R₄, R₇, R₈, R₉, R₁₀ and n1 are as defined in claim 2,
representing polysilanes of the general formula V wherein m1, m2 and m3 are equal to 1,
a dihalosilane of the general formula VIIa, 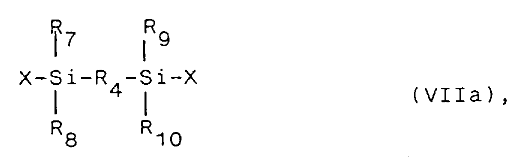 wherein R₄, R₇, R₈, R₉, R₁₀
and X are as defined in claim 2,
and
(B) for preparing polysilanes of the general formula VI,
a dihalosilane of the general formula VIIIa, 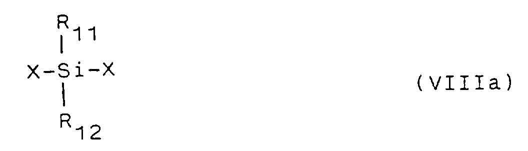 wherein R₁₁, R₁₂ and X are as defined in claim 2,
is subjected to the electrochemical reaction.

7. The method according to one of claims 1 to 6,
characterized in that
the substituents R₁, R₂, R₃, R₅, R₆, R₇, R₈, R₉, R₁₀, R₁₁ and/or R₁₂ are C₁₋₁₀-alkyl groups,
and/or aryl groups selected from phenyl, phenyl groups substituted with at least one C₁₋₆-alkyl group, and p-alkoxyphenyl groups.

8. The method according to claim 7, characterized in that the substituents R₁, R₂, R₃, R₅, R₆, R₇, R₈, R₉, R₁₀, R₁₁ and/or R₁₂ are C₁₋₆-alkyl groups and/or p-C₁₀-alkoxyphenyl groups.

9. The method according to one of claims 1 to 8,
characterized in that
(a) R₄ is an oxygen atom, or an aromatic or unsaturated aliphatic group, eventually having an oxygen heteroatom in the main chain, or
(CH₂ 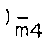 or (CH₂-CH₂-O 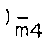 ,
m4 being 1 to 20 and/or
(b) X is a chlorine atom;
and/or
(c) the anode is formed of magnesium or an alloy thereof.

10. The method according to one of claims 1 to 9, characterized in that the electrochemical reaction is carried out in an aprotic solvent.

11. The method according to one of claims 1 to 10, characterized in that the halosilane and/or the dihalosilane compounds of formulae III, IIIa, IV, IVa, VII, VIIa, VIII and VIIIa, respectively, are used in a concentration in the solvent of 0.05 to 20 mole/l.

12. The method according to claim 11, characterized in that the halosilane and/or the dihalosilane compounds of formulae III, IIIa, IV, IVa, VII, VIIa, VIII and VIIIa, respectively, are used in a concentration in the solvent of 0.2 to 15 mole/l.

13. The method according to one of claims 1 to 12, characterized in that a supporting electrolyte is used which is selected from lithium perchlorate, lithium tetrafluoroborate, tetra-n-butylammonium perchlorate and/or tetra-n-butylammonium tetrafluoroborate.

14. The method according to claim 13, characterized in that the supporting electrolyte is lithium perchlorate or tetra-n-butylammonium perchlorate.

15. The method according to one of claims 1 to 14, characterized in that the supporting electrolyte is used in a concentration in the solvent of 0.05 to 5 mole/l.

16. The method according to claim 15, characterized in that the supporting electrolyte is used in a concentration of 0.1 to 3 mole/l.

17. The method according to claim 16, characterized in that the supporting electrolyte is used in a concentration of 0.15 to 1.2 mole/l.

18. The method according to one of claims 1 to 17, characterized in that the electrochemical reaction is carried out under sonication.

19. The method according to claim 18, characterized in that the sonication is performed at a frequency of the ultrasonic or supersonic waves of 10 to 70 kHz.

20. The method according to one of claims 1 to 19, characterized in that the other electrode used is of magnesium, copper, aluminum, or an alloy predominantly containing these metals, or of another electroconductive material.

21. The method according to claim 20, characterized in that the other electrode is of zinc, tin, nickel or cobalt, or an alloy predominantly containing these metals.

22. The method according to one of claims 1 to 12, characterized in that the polarity of the electrodes is changed over at predetermined time intervals.

23. The method according to claim 22, characterized in that the time intervals for switching are within the range of 0.01 to 60 min.

24. The method according to claim 23, characterized in that the time intervals for switching are within the range of 1 s to 10 min.

25. The method according to claim 24, characterized in that the time intervals for switching are within the range of 10 s to 3 min.

## Patentansprüche

1. Verfahren zur Herstellung von dimeren Silanverbindungen, die mindestens eine Si-Si-Bindung im Molekül aufweisen und der Formel I 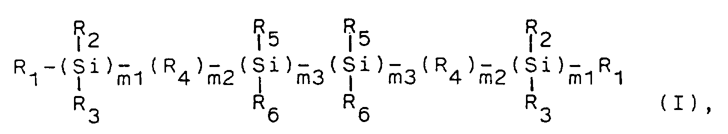 worin bedeuten:
- R₁, R₂, R₃, R₅ und R₆, die gleich oder verschieden sind, ein Wasserstoffatom, Alkyl, Aryl, Alkoxy oder Amino,
- R₄ ein Si-Atom, ein beliebiges anderes Atom als Si oder eine beliebige zweiwertige organische Gruppe, die ggf. ein Heteroatom in der Hauptkette enthält,
- m1 und m3 unabhängig eine Zahl von 1 bis 20, und
- m2 eine Zahl von 0 bis 20,
oder der Formel II 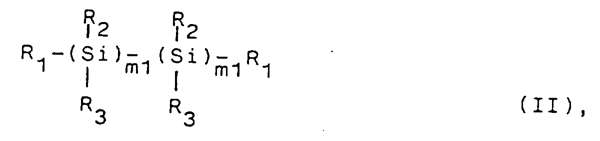 entsprechen, worin R₁, R₂, R₃ und m1 wie in Formel I definiert sind, indem
(A) zur Herstellung von Verbindungen der Formel I eine Halogensilanverbindung der allgemeinen Formel III 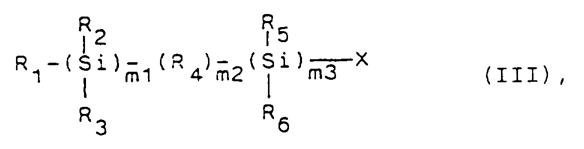 worin R₁, R₂, R₃, R₄, R₅, R₆, m1, m2 und m3 wie oben definiert sind und X ein Halogenatom darstellt, einer elektrochemischen Reaktion unterzogen wird,
und
(B) zur Herstellung von Verbindungen der Formel II eine Halogensilanverbindung der allgemeinen Formel IV 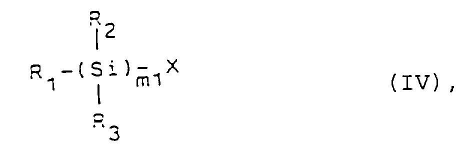 worin R₁, R₂, R₃, m1 und X wie weiter oben definiert sind, einer elektrochemischen Reaktion unterzogen wird,
dadurch gekennzeichnet, daß
die elektrochemische Reaktion unter Verwendung einer Anode aus Magnesium, Kupfer, Aluminium oder einer Legierung, die überwiegend diese Metalle enthält, durchgeführt wird.

2. Verfahren zur Herstellung von Polysilanen der allgemeinen Formel V 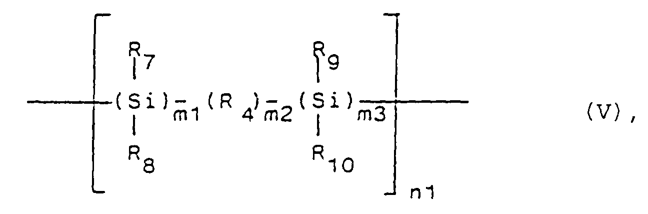 worin bedeuten:
- R₄ ein Si-Atom, ein beliebiges anderes Atom als Si oder eine beliebige zweiwertige organische Gruppe, die ggf. ein Heteroatom in der Hauptkette enthält,
- R₇, R₈, R₉, R₁₀, die gleich oder verschieden sind, ein Wasserstoffatom, Alkyl, Aryl, Alkoxy oder Amino,
- m1 und m3 unabhängige Zahlen von 1 bis 20,
- m2 eine Zahl von 0 bis 20
und
- n1 eine Zahl von 10 bis 10.000,
und von Polysilanen der allgemeinen Formel VI, 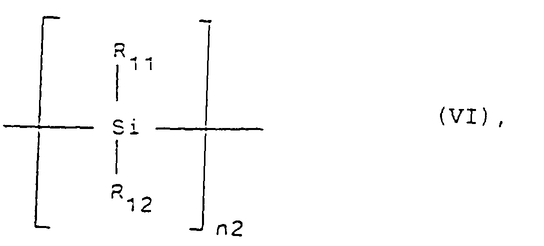 worin bedeuten:
- R₁₁, R₁₂, die gleich oder verschieden sind, ein Wasserstoffatom, Alkyl, Aryl, Alkoxy oder Amino, und
- n2 eine Zahl von 10 bis 11.000,
indem
(A) zur Herstellung von Verbindungen der Formel V ein V ein Dihalogensilan der allgemeinen Formel VII 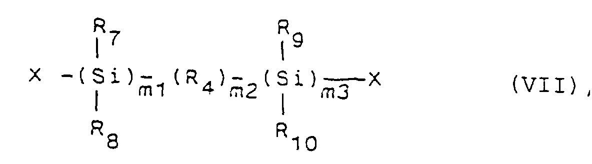 worin R₄, R₇, R₈, R₉, R₁₀, m1, m2 und m3 wie oben definiert sind und X ein Halogenatom ist, einer elektrochemischen Reaktion unterzogen wird,
und
(B) zur Herstellung von Verbindungen der Formel VI ein Dihalogensilan der allgemeinen Formel VIII 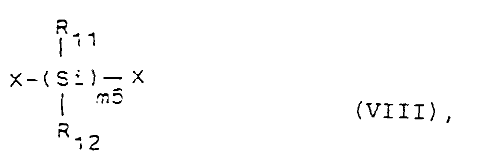 worin R₁₁, R₁₂ und X wie oben definiert sind und m5 eine Zahl von 1 bis 20 ist, einer elektrochemischen Reaktion unterzogen wird,
dadurch gekennzeichnet, daß die elektrochemische Reaktion unter Verwendung einer Anode aus Magnesium, Kupfer oder Aluminium oder einer überwiegend aus diesen Metallen bestehenden Legierung durchgeführt wird.

3. Verfahren nach Anspruch 1 oder 2, dadurch gekennzeichnet, daß m1, m3 und/oder m5 Zahlen von 1 bis 3 sind und/oder m2 eine Zahl von 0 bis 3 ist.

4. Verfahren nach einem der Ansprüche 1 bis 3, dadurch gekennzeichnet, daß m1, m3 und/oder m5 gleich 1 oder 2 sind und/oder m2 gleich 1 ist.

5. Verfahren nach Anspruch 1, dadurch gekennzeichnet, daß
(A) zur Herstellung von Verbindungen der allgemeinen Formel Ia 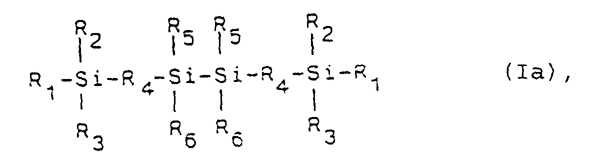 worin R₁, R₂, R₃, R₄, R₅ und F₆ wie in Anspruch 1 definiert sind,
bei denen es sich um Verbindungen der allgemeinen Formel I handelt, in der m1, m2 und m3 gleich 1 sind,
eine Halogensilanverbindung der allgemeinen Formel IIIa 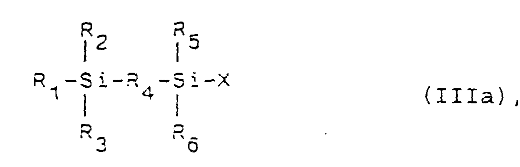 worin R₁, R₂, R₃, R₄ und X wie in Anspruch i definiert sind, und
(B) zur Herstellung von Verbindungen der allgemeinen Formel IIa 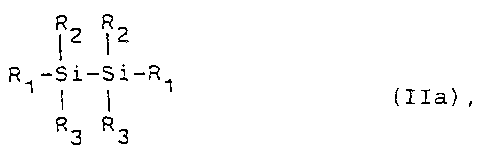 in der R₁, R₂ und R₃ wie in Anspruch 1 definiert sind, die Verbindungen der allgemeinen Formel II darstellen, in der ml gleich 1 ist,
eine Halogensilanverbindung der allgemeinen Formel IVa 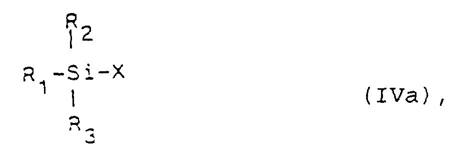 worin R₁, R₂, R₃ und X wie in Anspruch 1 definiert sind,
der elektrochemischen Reaktion unterzogen werden.

6. Verfahren nach Anspruch 2, dadurch gekennzeichnet, daß
(A) zur Herstellung von Polysilanen der allgemeinen Formel Va 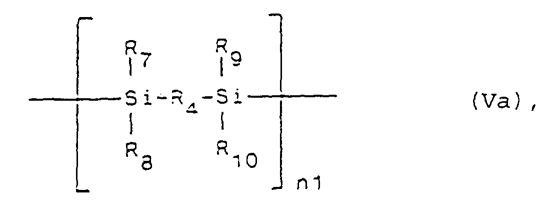 worin R₄, R₇, R₈, R₉, R₁₀ und n1 wie in Anspruch 2 definiert sind,
bei denen es sich um Polysilane der allgemeinen Formel V handelt, worin m1, m2 und m3 gleich 1 sind, ein Dihalogensilan der allgemeinen Formel VIIa 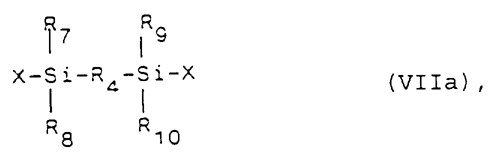 worin R₄, R₇, R₈, R₉, R₁₀ und X wie in Anspruch 2 definiert sind, und
(B) zur Herstellung von Polysilanen der allgemeinen Formel VI ein Dihalogensilan der allgemeinen Formel VIIIa 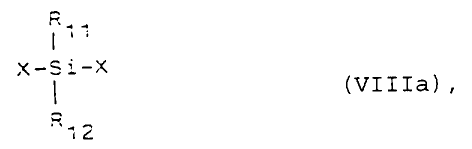 worin R₁₁, R₁₂ und X wie in Anspruch 2 definiert sind,
der elektrochemischen Reaktion unterzogen werden.

7. Verfahren nach einem der Ansprüche 1 bis 6, dadurch gekennzeichnet, daß die Substituenten R₁, R₂, R₃, R₅, R₆, R₇, R₈, R₉, R₁₀, R₁₁ und/oder R₁₂ C₁₋₁₀-Alkylgruppen und/oder Arylgruppen sind, die unter Phenyl, substituierten Phenylgruppen mit mindestens einer C₁₋₆-Alkylgruppe und p-Alkoxyphenylgruppen ausgewählt sind.

8. Verfahren nach Anspruch 7, dadurch gekennzeichnet, daß die Substituenten R₁, R₂, R₃, R₅, R₆, R₇, R₈, R₉, R₁₀, R₁₁ und/oder R₁₂ C₁₋₆-Alkylgruppen und/oder p-C₁₀-Alkoxyphenylgruppen sind.

9. Verfahren nach einem der Ansprüche 1 bis 8, dadurch gekennzeichnet, daß
(a) R₄ ein Sauerstoffatom, eine aromatische oder ungesättigte aliphatische Gruppe, die ggf. in der Hauptkette ein Sauerstoffheteroatom aufweist,
oder (CH₂ 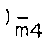 oder (CH₂-CH₂-O- 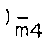 ist, worin m4 eine Zahl von 1 bis 20 ist, ist
und/oder
(b) X ein Chloratom ist,
und/oder
(c) die Anode aus Magnesium oder einer Legierung von Magnesium gebildet ist.

10. Verfahren nach einem der Ansprüche 1 bis 9, dadurch gekennzeichnet, daß die elektrochemische Reaktion in einem aprotischen Lösungsmittel durchgeführt wird.

11. Verfahren nach einem der Ansprüche 1 bis 10, dadurch gekennzeichnet, daß die Halogensilan- und/oder die Dihalogensilanverbindungen der Formeln III, IIIa, IV, IVa, VII, VIIa, VIII bzw. VIIIa in dem Lösungsmittel in einer Konzentration von 0,05 bis 20 mol/l verwendet werden.

12. Verfahren nach Anspruch 11, dadurch gekennzeichnet, daß die Halogensilan- und/oder Dihalogensilanverbindungen der Formeln III, IIIa, IV, IVa, VII, VIIa, VIII bzw. VIIIa in dem Lösungsmittel in einer Konzentration von 0,2 bis 15 mol/l verwendet werden.

13. Verfahren nach einem der Ansprüche 1 bis 12, dadurch gekennzeichnet, daß ein unterstützender Elektrolyt verwendet wird, der unter Lithiumperchlorat, Lithiumtetrafluoroborat, Tetra-n-butylammoniumperchlorat und/ oder Tetra-n-butylammoniumtetrafluoroborat ausgewählt ist.

14. Verfahren nach Anspruch 13, dadurch gekennzeichnet, daß der unterstützende Elektrolyt Lithiumperchlorat oder Tetra-n-butylammoniumperchlorat ist.

15. Verfahren nach einem der Ansprüche 1 bis 14, dadurch gekennzeichnet, daß der unterstützende Elektrolyt in dem Lösungsmittel in einer Konzentration von 0,05 bis 5 mol/l verwendet wird.

16. Verfahren nach Anspruch 15, dadurch gekennzeichnet, daß der unterstützende Elektrolyt in einer Konzentration von 0,1 bis 3 mol/l verwendet wird.

17. Verfahren nach Anspruch 16, dadurch gekennzeichnet, daß der unterstützende Elektrolyt in einer Konzentration von 0,15 bis 1,2 mol/l verwendet wird.

18. Verfahren nach einem der Ansprüche 1 bis 17, dadurch gekennzeichnet, daß die elektrochemische Reaktion unter Beschallung durchgeführt wird.

19. Verfahren nach Anspruch 18, dadurch gekennzeichnet, daß die Beschallung bei einer Frequenz der Ultra- oder Überschallwellen von 10 bis 70 kHz durchgeführt wird.

20. Verfahren nach einem der Ansprüche 1 bis 19, dadurch gekennzeichnet, daß die andere verwendete Elektrode aus Magnesium, Kupfer, Aluminium oder einer Legierung, die überwiegend diese Metalle enthält, oder einem anderen elektrisch leitfähigen Material besteht.

21. Verfahren nach Anspruch 20, dadurch gekennzeichnet, daß die andere Elektrode aus Zink, Zinn, Nickel oder Cobalt oder einer Legierung, die überwiegend diese Metalle enthält, besteht.

22. Verfahren nach einem der Ansprüche 1 bis 12, dadurch gekennzeichnet, daß die Polarität der Elektroden in vorgegebenen Zeitintervallen gewechselt wird.

23. Verfahren nach Anspruch 22, dadurch gekennzeichnet, daß die Zeitintervalle für das Umschalten der Polarität im Bereich von 0,01 bis 60 min liegt.

24. Verfahren nach Anspruch 23, dadurch gekennzeichnet, daß die Zeitintervalle zum Umschalten der Polarität im Bereich von 1 s bis 10 min liegen.

25. Verfahren nach Anspruch 24, dadurch gekennzeichnet, daß die Zeitintervalle zum Umschalten der Polarität im Bereich von 10 s bis 3 min liegen.

## Revendications

1. Procédé pour préparer des composés silanes du type dimère comprenant au moins une liaison Si-Si dans la molécule et ayant une des formules générales I 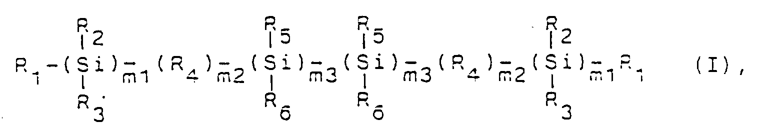 dans laquelle
- R₁, R₂, R₃, R₅ et R₆, étant identiques ou différents, sont un atome d'hydrogène, un groupe alkyle, un groupe aryle, un groupe alkoxyde ou un groupe amino,
- R₄ est du Si, tout atome non Si, ou tout groupe organique divalent, comprenant éventuellement un hétéroatome dans la chaîne principale,
- m1 et m3 sont compris entre 1 et 20, indépendamment l'un de l'autre,
et
- m2 est compris entre 0 et 20,
et II, 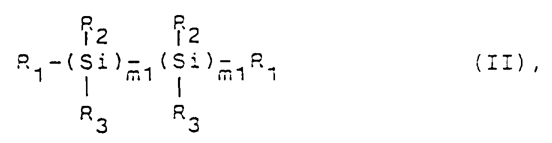
dans laquelle R₁, R₂, R₃ et m1 sont définis comme dans la formule I, par soumission à une réaction électrochimique
(A) pour préparer des composés de la formule I, un composé halosilane de la formule générale III, 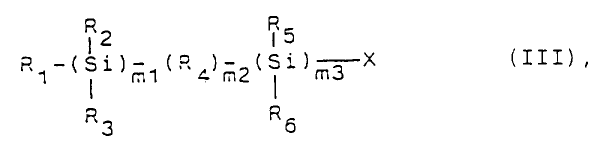 dans laquelle R₁, R₂, R₃, R₄, R₅, R₆, m1, m2 et m3 sont définis comme précédemment, et X est un atome halogène,
et
(B) pour préparer des composés de la formule II, un composé halosilane de la formule générale IV, 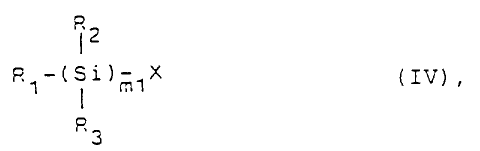 dans laquelle R₁, R₂, R₃, m1 et X sont définis comme précédemment,
caractérisé en ce que
ladite réaction électrochimique est exécutée en utilisant une anode de magnésium, de cuivre, d'aluminium, ou d'un alliage contenant en majorité ces métaux.

2. Procédé pour préparer des polysilanes des formules générales V 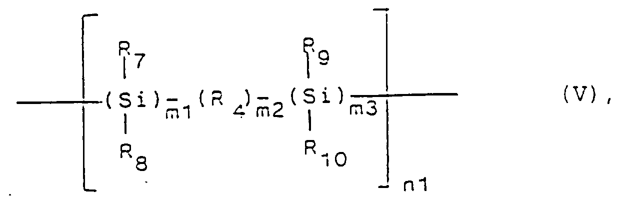 dans laquelle
- R₄ est du Si, tout atome non Si, ou tout groupe organique divalent, comprenant éventuellement un hétéroatome dans la chaîne principale,
- R₇, R₈, R₉, R₁₀, étant identiques ou différents, sont un atome d'hydrogène, un groupe alkyle, un groupe aryle, un groupe alkoxyde ou un groupe amino,
- m1 et m3 sont compris entre 1 et 20, indépendamment l'un de l'autre,
- m2 est compris entre 0 et 20,
et
- n1 est compris entre 10 et 10.000,
et VI 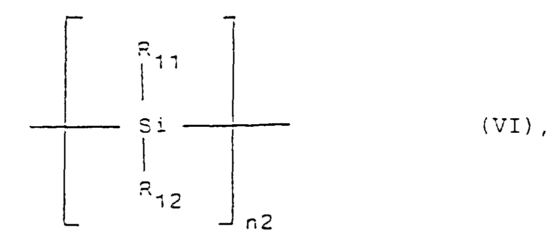
dans laquelle
- R₁₁ et R₁₂, étant identiques ou différents, sont un atome d'hydrogène, un groupe alkyle, un groupe aryle, un groupe alkoxyde ou un groupe amino,
et
- n2 est compris entre 10 et 11.000
par soumission à une réaction électrochimique
(A) pour préparer des composés de la formule V, un dihalosilane de la formule générale VII, 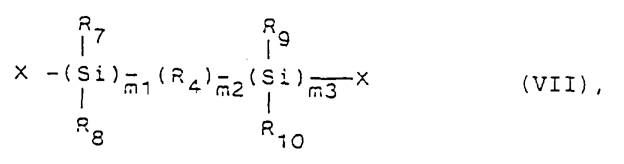 dans laquelle R₄, R₇, R₈, R₉, R₁₀, m1, m2 et m3 sont définis comme précédemment, et X est un atome halogène,
et,
(B) pour préparer des composés de la formule VI, un dihalosilane de la formule générale VIII, 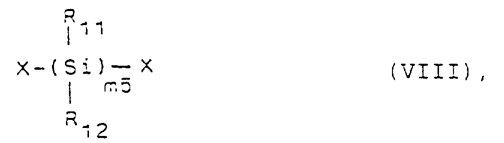 dans laquelle R₁₁, R₁₂ et X sont définis comme précédemment, et m5 est compris entre 1 et 20,
caractérisé en ce que ladite réaction électrochimique est exécutée en utilisant une anode de magnésium, de cuivre ou d'aluminium, ou d'un alliage contenant en majorité ces métaux.

3. Procédé selon la revendication 1 ou 2, caractérisé en ce que m1, m3 et/ou m5 sont compris entre 1 et 3 et/ou m2 est compris entre 0 et 3.

4. Procédé selon l'une des revendications 1 à 3, caractérisé en ce que m1, m3 et/ou m5 sont égaux à 1 ou 2 et/ou m2 est égal à 1.

5. Procédé selon la revendication 1, caractérisé en ce que
(A) pour préparer des composés de la formule générale Ia, 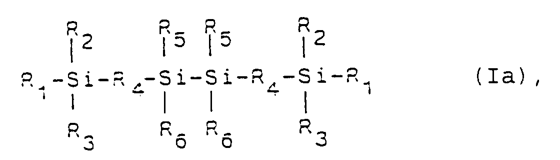 dans laquelle R₁, R₂, R₃, R₄, R₅ et R₆ sont définis comme dans la revendication 1,
représentant des composés de la formule générale I,
dans laquelle m1, m2 et m3 sont égaux à 1,
un composé halosilane de la formule générale IIIa, 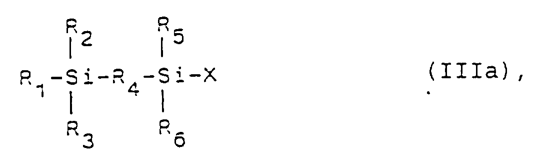 dans laquelle R₁, R₂, R₃, R₄ et X sont définis comme dans la revendication 1,
et
(B) pour préparer des composés de la formule générale IIa, 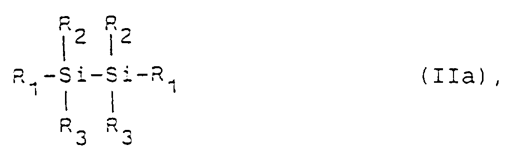 dans laquelle R₁, R₂ et R₃ sont définis comme dans la revendication 1,
représentant des composés de la formule générale II,
dans laquelle m1 est égal à 1,
un composé halosilane de la formule générale IVa, 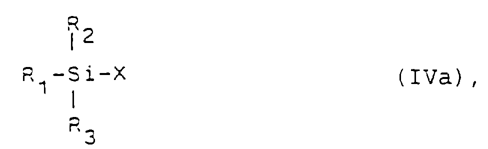 dans laquelle R₁, R₂, R₃ et X sont définis comme dans la revendication 1,
est soumis à la réaction électrochimique.

6. Procédé selon la revendication 2, caractérisé en ce que
(A) pour préparer des polysilanes de la formule générale Va, 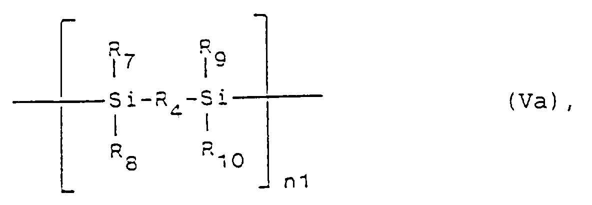 dans laquelle R₄, R₇, R₈, R₉, R₁₀ et n1 sont définis comme dans la revendication 2,
représentant des polysilanes de la formule générale V,
dans laquelle m1, m2 et m3 sont égaux à 1,
un dihalosilane de la formule générale VIIa, 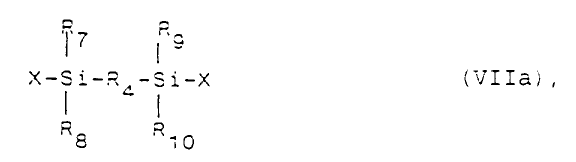 dans laquelle R₄, R₇, R₈, R₉, R₁₀
et sont définis comme dans la revendication 2,
et
(B) pour préparer des polysilanes de la formule générale VI,
un dihalosilane de la formule générale VIIIa, 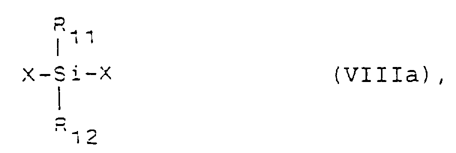 dans laquelle R₁₁, R₁₂ et X sont définis comme dans la revendication 2,
est soumis à la réaction électrochimique.

7. Procédé selon l'une des revendications 1 à 6, caractérisé en ce que
les substituants R₁, R₂, R₃, R₄, R₅, R₆, R₇, R₈, R₉, R₁₀, R₁₁ et/ou R₁₂ sont des groupes C₁-₁₀-alkyle,
et/ou des groupes aryles sélectionnés parmi le phényle, les groupes phényles substitués par au moins un groupe C₁₋₆-alkyle, et les groupes p-alkoxyphényle.

8. Procédé selon la revendication 7, caractérisé en ce que les substituants R₁, R₂, R₃, R₄, R₅, R₆, R₇, R₈, R₉, R₁₀, R₁₁ et/ou R₁₂ sont des groupes C₁₋₆-alkyle et/ou des groupes p-C₁₀-alkoxyphényles.

9. Procédé selon l'une quelconque des revendications 1 à 8, caractérisé en ce que
(a) R₄ est un atome d'oxygène, ou un groupe aromatique ou un groupe aliphatique non saturé, ayant éventuellement un hétéroatome d'oxygène dans la chaîne principale, ou
(CH₂ 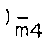 ou (CH₂-CH₂-O 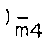 ,
m4 étant compris entre 1 et 20
et/ou
(b) X est un atome de chlore ;
et/ou
(c) l'anode est formée de magnésium ou d'un alliage de ce dernier.

10. Procédé selon l'une des revendications 1 à 9, caractérisé en ce que la réaction électrochimique est exécutée dans un solvant exempt de protons.

11. Procédé selon l'une des revendications 1 à 10, caractérisé en ce que les composés halosilanes et/ou dihalosilanes des formules III, IIIa, IV, IVa, VII, VIIa, VIII et VIIIa sont respectivement utilisés dans une concentration dans le solvant de 0,05 à 20 mole/l.

12. Procédé selon la revendication 11, caractérisé en ce que les composés halosilanes et/ou dihalosilanes des formules III, IIIa, IV, IVa, VII, VIIa, VIII et VIIIa sont respectivement utilisés dans une concentration dans le solvant de 0,2 à 15 mole/l.

13. Procédé selon l'une des revendications 1 à 12, caractérisé en ce qu'un électrolyte de support est utilisé, lequel est sélectionné parmi le perchlorate de lithium, le tétrafluoroborate de lithium, le perchlorate de tétra-n-butylammonium et/ou le tétrafluoroborate de tétra-n-butylammonium.

14. Procédé selon la revendication 13, caractérisé en ce que l'électrolyte de support est du perchlorate de lithium ou du perchlorate de tétra-n-butylammonium.

15. Procédé selon l'une des revendications 1 à 14, caractérisé en ce que l'électrolyte de support est utilisé dans une concentration dans le solvant de 0,05 à 5 mole/l.

16. Procédé selon la revendication 15, caractérisé en ce que l'électrolyte de support est utilisé dans une concentration de 0,1 à 3 mole/l.

17. Procédé selon la revendication 16, caractérisé en ce que l'électrolyte de support est utilisé dans une concentration de 0,15 à 1,2 mole/l.

18. Procédé selon l'une des revendications 1 à 17, caractérisé en ce que la réaction électrochimique est exécutée sous sonication.

19. Procédé selon la revendication 18, caractérisé en ce que la sonication est effectuée à une fréquence d'ondes ultrasoniques ou supersoniques de 10 à 70 kHz.

20. Procédé selon l'une des revendications 1 à 19, caractérisé en ce que l'autre électrode utilisée est de magnésium, de cuivre, d'aluminium, ou d'un alliage contenant en majorité ces métaux, ou d'une autre matière électroconductrice.

21. Procédé selon la revendication 20, caractérisé en ce que l'autre électrode est de zinc, d'étain, de nickel ou de cobalt, ou d'un alliage contenant en majorité ces métaux.

22. Procédé selon l'une des revendications 1 à 12, caractérisé en ce que la polarité des électrodes est changée à des intervalles de temps prédéterminés.

23. Procédé selon la revendication 22, caractérisé en ce que les intervalles de temps pour la commutation sont compris dans la plage de 0,01 à 60 minutes.

24. Procédé selon la revendication 23, caractérisé en ce que les intervalles de temps pour la commutation sont compris dans la plage de 1 seconde à 10 minutes.

25. Procédé selon la revendication 24, caractérisé en ce que les intervalles de temps pour la commutation sont compris dans la plage de 10 secondes à 3 minutes.
